# Europäisches Patentamt
# European Patent Office
# Office européen des brevets

(11) Numéro de publication: **0 145 577**
**B1**

(12) # FASCICULE DE BREVET EUROPÉEN

(45) Date de publication du fascicule du brevet:
25.01.89

(51) Int. Cl.⁴: **B 32 B 7/00,** B 32 B 15/00

(21) Numéro de dépôt: **84402407.5**

(22) Date de dépôt: **26.11.84**

(54) **Structure métallique emboutissable, de type sandwich, son procédé de fabrication et une installation pour la mise en oeuvre de ce procédé.**

(30) Priorité: 12.12.83 FR 8319855
20.12.83 FR 8320341

(43) Date de publication de la demande:
**19.06.85 Bulletin 85/25**

(45) Mention de la délivrance du brevet:
**25.01.89 Bulletin 89/4**

(84) Etats contractants désignés:
**AT BE DE FR GB IT LU NL SE**

(56) Documents cité:
**FR-A-2 481 644**
**GB-A-1 128 633**
**US-A-3 620 880**
**US-A-4 259 385**

**Le dossier contient des informations techniques présentées postérieurement au dépôt de la demande et ne figurant pas dans le présent fascicule.**

(73) Titulaire: **Lesourd, Hugues, 3, rue de Magdebourg, F-75116 Paris (FR)**

(72) Inventeur: **Lesourd, Hugues, 3, rue de Magdebourg, F-75116 Paris (FR)**

(74) Mandataire: **Bruder, Michel, Cabinet Michel Bruder 10, rue de la Pépinière, F-75008 Paris (FR)**

LIBER, STOCKHOLM 1989

## Description

La présente invention concerne une structure métallique emboutissable, du type sandwich, son procédé de fabrication et une installation pour la mise en oeuvre de ce procédé.

On connaît déjà des structures métalliques du type sandwich qui ont la propriété de présenter une grande rigidité associée à une faible masse. Ces structures résultent généralement de l'assemblage de deux semelles, éléments plans de faible épaisseurs et d'une âme d'épaissement plus importante interposée entre les deux semelles.

Le brevet US-A-3 704 277 décrit une telle structure métallique du type sandwich dont l'âme, constituée d'une grille ou d'un treillis métallique, est prise en sandwich entre deux tôles de faible épaisseurs en étant soudée à ces dernières. Si une telle structure sandwich offre l'avantage d'avoir une grande rigidité associée à une faible masse, elle n'en présente pas moins un inconvénient très important, à savoir qu'elle ne se prête pas à une opération d'emboutissage, du fait de la liaison rigide entre l'âme et les tôles constituant les deux semelles, par suite du grand nombre de points de soudure utilisés pour assurer cette liaison. De ce fait une telle structure sandwich est inutilisable chaque fois que l'on cherche à fabriquer des pièces de formes très diverses, par emboutissge, ce qui est le cas, notamment, dans l'industrie automobile.

Il en est de même pour ce qui est de la structure décrite dans le brevet GB-A-1 120 631, cette structure étant en forme de "nid d'abeille" dont les parois des alvéoles sont constituées par des structures métalliques du type sandwich dont l'âme est un treillis. La liaison entre l'âme et les semelles du sandwich peut être assurée par un adhésif. S'il a été bien nécessaire de déformer la paroi pour former le nid d'abeille, une fois celui-ci formé, on obtient une pièce particulièrement rigide et qui ne peut pas être emboutie sans déforer la structure géométrique.

La présente invention vise à remédier à ces inconvéniénts en procurant une structure sandwich de conception particulièrement simple et se prêtant très aisément à une opération d'emoutissage.

A cet effet cette structure métallique du type sandwich, comportant deux semelles externes métalliques et une âme interne prise entre les deux semelles externes et constituée par une toile de tamis ou un grillage métallique, une couche de colle assurant la liaison entre ces semelles et et l'âme, est caractérisée en ce que la colle est répartie uniquement dans les mailles du tamis ou grillage en étant absente des zones de contact entre le tamis ou grillage et les semelles.

L'invention concerne également un procédé de fabrication d'une sturcute metallique sandwich dans lequel on encolle au moins l'une des trois éléments constitutifs de la stucture et immédiatement après on assemble l'ensemble de la structure sandwich, constituée par les deux semelles et l'âme intermédiaire, par pressage, caractérisé en ce qu'on réalise le pressage alors que la colle se trouve encore à l'état fluide, sous une pression de quelques bars, afin que la colle à l'état fluide flue entre les parties dures et vienne se loger dans les mailles de l'âme, en étant absente des zones de contact entre l'âme et les semelles, et on maintient cette pression pendant la période de durcissement complet de la colle.

L'invention concerne aussi une l'installation, pour la mise en oeuvre dudit procédé et comprenant des moyens pour dévider, à partir de bobines respectivement une bande de tôle formant la semelle supérieure une bande de tôle formant la semelle inférieur et une bande de tamis du grillage formant l'âme, des rouleaux de guidage des deux bandes de tôle et de la bande de tamis ou grillage de manière que ces trois bandes soient superposées, la bande de tamis ou grillage étant prises au milieu.

Une telle installation, connue en soi du document US-A-4 259 385, est caractérisée en ce qu'elle comprend un poste d'encollage d'au moins un des trois éléments constitutifs de la sturcture sandwich, et un dispositifs de pressage de l'ensemble des trois bandes lequel est contitué de rouleaux superposés entre lesquels passe cet ensemble de bandes.

La couche de colle, continue ou discontinue, est appliquée, avant la formation de la structure sandwich, de préférence sur l'une des semelles ou sur ces deux semelles, avec ou non enduction du grillage. Suivant une variante on pourrait encoller seulement le grillage, l'assemblage de cette structure sandwich étant réalisé, par pressage, immédiatement après l'encollage de manière à permettre à la colle encore à l'état fluide, de fluer entre les parties dures et de venir se loger dans les mailles du tamis ou grillage constituant l'âme. On évite de cette manière la formation d'un film uniforme isolant qui empêcherait ultérieurement un soudage à l'électricité. Ainsi la couche de colle permet de réaliser l'assemblage des deux semelles et de l'âme sans avoir à faire appel à des points de soudure au moment de la fabrication. Les semelles et l'âme peuvent être chacune en qualités ou nuances de métal différentes, soudables ou non soudables. Dans le cas où les trois éléments sont en métal soudable, la soudure par points reste toute fois possible, le cas échéant, à la périphérie ou en plein corps. Ces points de soudure étant dans ce dernier cas suffisamnent espacés afin de permettre la déformation géométrique des mailles de la toile ou du grillage métallique constituant l'âme. Ces points de soudure additionnels peuvent être réalisés au moment de l'utilisation ou de l'assemblage avec une autre pièce. Ce mode de construction peut être utilisé notamment pour les pièces d'un véhicule automobile. Si on utilise, pour la construction de la structure sandwich, des métaux non soudables et si on réalise l'assemblage en employant une colle, on obtient une structure finale qui a pour avantage d'avoir une rigidité flexionnelle satisfaisante qui est obtenue grâce à la toile métallique ou au grillage constituant l'âme, qui offre également une possibilité d'emboutissage grâce aux facultés d'allongement du métal, à l'embuvage des fils et à la possibilité de déformation géométrique des mailles.

Une fois emboutis ou roulés les divers éléments constitutifs de la structure sandwich restent assemblés même sans liaison autre que celle du pourtour.

Ces points de soudure sont dans ce dernier cas suffisamment espacés afin de permettre la déformation géométrique des mailles de la toile ou du grillage métallique constituant l'âme.

On peut utiliser, pour constituer l'âme de la structure sandwich, des tissus métalliques obtenus par l'entrelacement ordonné de fils métalliques formant entre eux des vides définis. Ces tissus sont caractérisés par la nature des fils de chaîne et des fils de trame ainsi que par leur "armure" qui traduit le mode d'entrelacement des fils de chaîne et de trame on peut utiliser avantageusement deux types d'armure dans les structures sandwich suivant l'invention. L'une des armures utilisables est l'armure unie à mailles carrées tandis que l'autre type d'armure est l'armure croisé à mailles carrées tissées à chevron pour obtenir une plus grande stabilité au moment du déroulage lors de la fabrication. Les tissus utilisés dans la fabrication des structures sandwich suivant l'invention peuvent avoir les mêmes fils de chaîne et de trame. Ils sont en acier doux recuit qui est le plus facile à travailler et le plus déformable, indépendamment de son faible coût. Le diamètre des fils utilisés étant de 0,22 à 0,45 mm, la limite élastique apparente de ces fils est de 26 à 32 daN/mm$^2$, la résistance maximal du fil est de 45 daN/mm$^2$, et le vide des mailles va de 1 à 3 mm.

Suivant une variante on pourrait également utiliser, en tant qu'âme, un métal déployé.

La structure suivant l'invention peut être utilisée pour la fabrication de pièces tubulaires. Dans ce cas on roule la structure sandwich sur elle-même et on soude entre eux les bords en regard de la structure sandwich ainsi enroulée, le soudage étant effectué électriquement ou par ultrasons.

Pour réaliser une pièce tubulaire on peut avantageusement utiliser une structure sandwich constituée par un complexe dissymétrique du point de vue épaisseur, c'est-à-dire comportant une tôle plus épaisse à l'extérieur et une tôle plus mince à l'intérieur. La soudure qui assure le maintien de la pièce tubulaire est alors réalisée sur la tôle épaisse externe tandis que la tôle fine interne est maintenue plaquée contre la toile de tamis ou le grillage constituant l'âme, sous l'effet de son retour élastique.

Par ailleurs on peut utiliser, pour réaliser les semelles externes et internes du tube, des métaux différents suivant les applications envisagées.

On décrira ci-après, à titre d'exemple non limitatif, une forme d'exécution de la présente invention, en référence au dessin annexé sur lequel:

La figure 1 est une vue en coupe schématique illustrant les diverses phases de la fabrication d'une structure sandwich suivant l'invention.

La figure 2 est une vue en coupe schématiqe d'une structure sandwich suivant l'invention après une opération d'emboutissage.

La figure 3 est un schéma d'une installation de fabrication de la structure sandwich suivant l'invention.

La structure métallique du type sandwich suivant l'invention est réalisée par l'assemblage de deux éléments externes ou semelles 1 et 2 entre lesquels est emprisonné un élément interne ou âme 3.

Les semelles 1 et 2 sont constituées par des feuillards ou tôles minces tandis que l'âme 3 est constituée par une toile de tamis ou un grillage métallique.

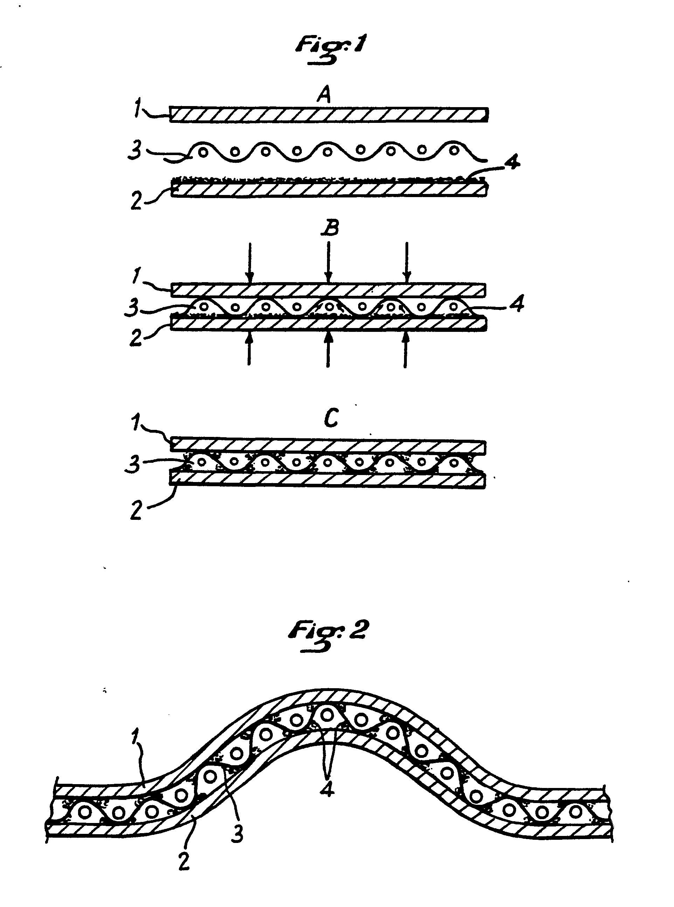

Suivant l'invention on encolle préalablement, avant l'assemblage de la structure sandwich, un, deux ou les trois éléments de la structure. Dans le cas représenté une semelle seulement est encollée, en l'occurrence la semelle inférieure 2, sur, sa face supérieure destinée à venir en contact avec l'âme 3. On forme ainsi sur la semelle inférieure 2 une couche de colle 4, à l'état fluide, couche qui peut être continue ou discontinue, sous la forme de traits ou de zones ponctuelles. Les deux semelles 1, 2 et l'âme 3 se présentent ainsi, avant leur assemblage, telles que représentées dans la partie A de la figure 1.

Après l'encollage de la semelle 2, on procède au pressage des deux semelles 1, 2, l'une sur l'autre, comme il est illustré par la partie B de la figure 1. Ce pressage doit avoir lieu avant durcissement de la colle 4, c'est-à- dire tant que celle-ci se trouve encore dans un état fluide. Par suite de ce pressage la colle 4, encore à l'état fluide, peut fluer entre les parties dures de l'âme 3 et elle peut ainsi venir se loger dans les mailles du tamis ou du grillage constituant cette âme 3, comme il est indiqué par les flèches sur la partie B de la figure 1.

Après durcissement de la colle on obtient une structure sandwich telle que représentée par la partie C de la figure 1. Cette structure sandwich comprend les deux semelles 1, 2 liées l'une à l'autre par la colle 4, alors durcie, qui remplit les interstices de l'âme intermédiaire 3. On notera que les fils du tamis ou grillage constituant l'âme 3 restent en contact avec les semelles 1, 2 dans des zones pratiquement dépourvues de colle, si bien qu'il est possible de compléter ultérieurement l'assemblage par une opération de soudage, du fait que le courant électrique peut passer aisément d'une semelle à l'autre dans le cas où ces semelles sont en un matériau conducteur.

Une fois l'assemblage de la structure sandwich terminé, on peut procéder à un emboutissage de celle-ci pour lui donner toute forme désirée. La figure 2 représente, à titre d'exemple, une pièce emboutie que l'on peut obtenir à partir de la structure sandwich plane. La déformation de cette structure sandwich est rendue possible du fait que la colle qui assure la liaison entre les deux semelles 1, 2 présente, même à l'état durci, une certaine élasticité permettant un glissement relatif entre les deux semelles 1, 2 et l' âme intermédiaire 1.

Suivant une variante de réalisation et pour des applications particulières, l'âme peut être constituée par plusieurs grillages ou toiles de tamis superposés.

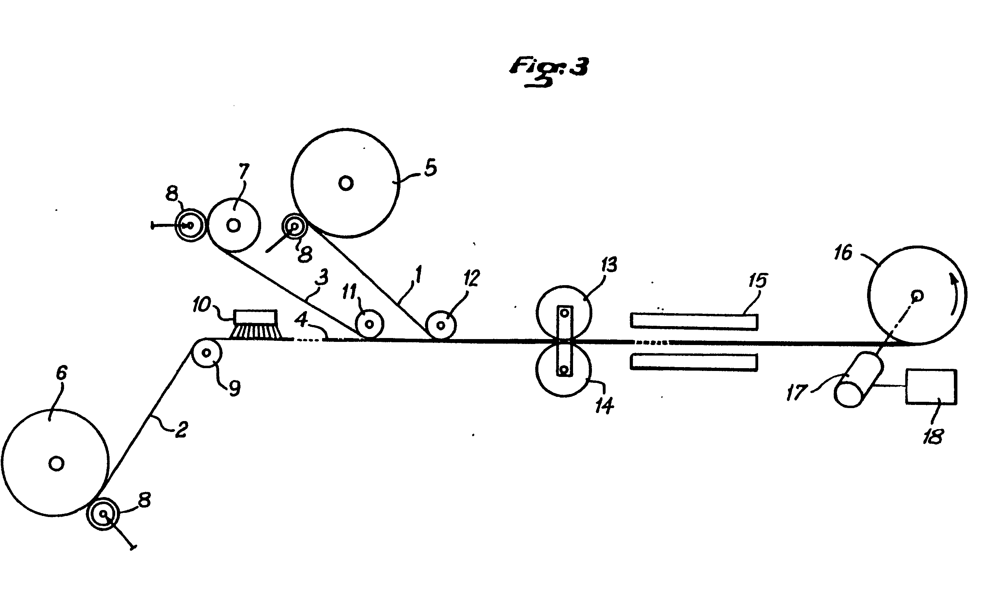

On décrira maintenant, en se référant à la figure 3, une installation mettant en oeuvre le procédé suivant l'invention. L'installation décrite ci-dessous ne pratique l'encollage que de la semelle inférieure mais suivant les cas il est prévu de pouvoir encoller également le grillage avec raclage postérieur et/ou la semelle supérieure.

La tôle 1 constituant la semelle supérieure, la tôle 2 constituant la semelle inférieure et l'âme 3 en grillage sont débités en continu à partir de dévidoirs de bobines respectives 5, 6 et 7. Ces trois dévidoirs sont pourvus de freins 8 régulateurs de tension.

La tôle constituant l'âme inférieure 2 passe sur un rouleau de renvoi 9 pour être dévié horizontalement et passer ensuite sous un dispositif d'encollage 10 projetant sur la face supérieure de la tôle 2 une couche de colle 4. La tôle inférieure 2 ainsi encollée passe ensuite sous un rouleau de guidage 11 et le grillage constituant l'âme 3 passe entre la tôle inférieure 2 et ce rouleau de guidaqe 11. L'ensemble formé par le grillage 3 et la tôle inférieure 2 encollée passe ensuite sous un autre rouleau de guidage 12 où est déviée horizontalement la tôle supérieure 1 qui vient ainsi s'appliquer sur le grillage constituant l'âme 3. L'ensemble formé par les deux tôles superposées 1, 2 et l'âme en grillage intermédiaire 3 passe immédiatement après entre une paire de rouleaux presseurs superposés 13, 14. Ces rouleaux presseurs sont revêtus sur leur pourtour d'une couche de caoutchouc de grande dureté afin de corriger dans la mesure du possible les défauts de planéité. A la sortie du bloc pressur 13, 14 il est prévu éventuellement d'un dispositif de réchauffage 15 permettant d'accélérer la prise de colle lorsque cela est nécessaire. La structure sandwich ainsi formée est ensuite entraînée et est enroulée pour former une bobine 16 sur un mandrin entraîné en rotation par un moteur 17 piloté par un dispositif d'asservissement 18. De ce fait une pression permanente s'exerce entre chaque spire de la bobine 16 du fait de la tension d'enroulage assurée par le système asservi 17, 18. Cette pression qui est de l'ordre de quelques bars accentue le fluage de la colle entre les parties dures, vers les mailles du tamis ou du grillage constituant l'âme. Cette pression étant maintenue durant le durcisement complet de la colle évite la formation d'un film solant qui empêcherait ultérieurement un soudage à l'élecricité.

La colle utilisée est du type "structurale". Une colle polyuréthane à deux composants est le mieux adaptée pour assurer une fabrication industrielle, du fait de sa souplesse une fois durcie, permettant l'emboutissage, et de la possibilité qu'elle offre d'avoir un assemblage manipulable dans un temps très court après dépose.

L'installation d'encollage 10 comprend un appareil doseur/mélangeur suivi d'un appareil de dépose qui peut être, suivant les cas, un pulvérisateur ou une petite extrudeuse pour la dépose par traits.

La quantité de colle utilisée est d'environ 100 g/m², la pression après encollage étant supérieure ou égale à 1 bar.

Une fois la colle complètement durcie, il peut être nécessaire de passer le sandwich obtenu dans une planeuse afin de rectifier les défauts de planéité dus soit aux tôles d'origine, soit à des irrégularités de dépose de la colle.

**Revendications**

1. Structure métallique du tyupe sandwich, comportant deux semelles externes métalliques (1, 2) et une âme interne (3) prise entre les deux semelles externes et constituée par une toile de tamis ou un grillage métallique, une couche de colle (4) assurant la liaison entre ces semelles et l'âme, caractérisée en ce que la colle (4) est répartie uniquement dans les mailles du tamis ou grillage (3) en étnat absente des zones de contact entre le tamis ou grillage (3) et les semelles (1, 2).

2. Structure métallique du type sandwich suivant la revendication 1, caractérisé en ce qu'elle constitue une pièce tubulaire, obtenue en roulant sur elle-même une structure sandwich dissymétrique du point de vue épaisseur, c'est-à-dire comportant une tôle plus épaisse à l'extérieur et une tôle plus mince à l'interieur, la soudure qui assure le maintien de la pièce tubulaire étant alors réalisée sur la tôle épaisse externe tandis que la tôle fine interne est maintenue plaquée contre la toile de tamis ou le grillage constituant l'âme, sous l'effet de son retour élastique.

3. Procédé de fabrication d'une sturcture métallique sandwich suivant l'une quelconque des revendications 1 et 2 dans lequel on encolle au moins l'un des trois éléments constitutifs de la structure (1, 2, 3) et immédiatent après on assemble l'ensemble de la structure sandwich, constituée par les deux semelles (1, 2) et l'âme intermédiaire (3), par pressage, caractérisé en ce qu'on réalise le pressage alors que la colle se trouve encore à l'état fluide, sous une pression de quelques bars, afin que la colle à l'état fluide flue entre les parties dures et vienne se loger dans les mailles de l'âme (3), en étant absente des zones de contact entre l'âme (3) et les semelles (1, 2) et on maintient cette pression pendant la période de durcissment complet de la colle.

4. Installation pour la mise en oeuvre du procédé suivant la revendication (3) comprenant des moyens pour dévider, à partie de bobines (5, 6, 7), respectivement une bande de tôle formant la semelle supérieure (1), une bande de tôle formant la semelle inférieure (2) et une bande de tamis ou grillage formant l'âme (3), des rouleaux (9, 11, 12) de guidage des deux bandes de tôles (1, 2) et de la bande de tamis ou grillage (3) de manière que ces trois bandes soient superposées, la bande de tamis ou grillage (3) étant prise au milieu, caractérisée en ce qu'elle comprend un poste (10) d'encollage d'au moins un des trois éléments constitutifs (1, 2, 3) de la structure sandwich, et un dispositifs de pressage de l'ensemble des trois bandes (1, 2, 3) lequel est constitué de rouleaux (13, 14) superposés entre lesquels passe cet ensemble de bandes (1, 2, 3).

5. Installation suivant la revendication 4, caractérisée en ce que les moyens pour dévider les bobines (5, 6, 7) de tôles et de tams ou grillage comportent des freins (8) régulateurs de tension.

6. Installation suivant l'une quelconque des revendications 4 et 5 caractérisée en ce qu'elle comporte, à la sortie du dispositif de pressage (13, 14) un dispositif de réchauffage (15) pour accélérer la prise de la colle.

7. Installation suivant l'une quelconque des revendications 4 et 6 caractérisée en ce que la structure sandwich est enroulée pour former une bobine (16) sur un mandrin entraîne en rotation par un moteur (17) piloté par un dispositif d'asservissment (18) si bien qu'une pression permanente s'exerce entre chaque spire de la bobine (16) du fait de la tension d'enroulage assurée par le système asservi (17, 18).

**Patentansprüche**

1. Sandwichartig aufgebauter Metallgegenstand mit zwei äußeren, metallischen Sohlen (1, 2) und einer inneren, von den beiden äußeren Sohlen eingefaßten Einlage (3), die von einem Siebgewebe oder metallischen Gitterwerk gebildet wird, und mit einer Klebstoffschicht (4) zur Sicherstellung der Verbindung zwischen diesen Sohlen und der Einlage, dadurch gekennzeichnet, daß der Klebstoff nur in den Maschen des Siebes oder Gitterwerks (3) verteilt ist, die von den Berührungsbereichen zwischen dem Sieb oder Gitterwerk (3) und den Sohlen (1, 2) entfernt sind.

2. Sandwichartig aufgebauter Metallgegenstand nach Anspruch 1, dadurch gekennzeichnet, daß er ein rohrförmiges Stück bildet, das durch das Aufrollen auf sich selbst einer Sandwichstruktur erhalten wird, die in Bezug auf ihre Dicke unsymmetrisch ist, d.h. an der Außenseite ein dickeres Blech und an der Innenseite ein dünneres Blech umfaßt, wobei die Schweißverbindung zur Erhaltung des rohrförmigen Stücks auf dem äußeren, dicken Blech hergestellt wird, während das innere, dünne Blech sich unter der Wirkung seines elastischen Rückfederungsvermögens in Anlage an dem die Einlage bildenden Siebgewebe oder Gitterwerk befindet.

3. Verfahren zur Herstellung eines sandwichartig aufgebauten Metallgegenstandes nach einem der Ansprüche 1 oder 2, bei welchem man wenigstens eines der drei den Gegenstand bildenden Elemente (1, 2, 3) mit Klebstoff versieht und unmittelbar danach die aus den beiden Sohlen (1, 2) und der zwischen ihnen anzuordnenden Einlage (3) gebildete Anordnung der sandwichartigen Struktur durch Druck zusammenfügt, dadurch gekennzeichnet, daß man den Druck in der Größenordnung von wenigen bar ausübt, wenn sich der Klebstoff noch in fließfähigem Zustand befindet, damit der in fließfähigern Zustand befindliche Klebstoff zwischen die harten Abschnitte fließt und sich in den Maschen der Einlage (3) einlagert, die von den Berührungsbereichen zwischen der Einlage (3) und den Sohlen (1, 2) entfernt sind, und daß man diesen Druck während der vollständigen Härtungsdauer des Klebstoffs aufrechterhält.

4. Vorrichtung zur Durchführung des Verfahrens nach Anspruch 3 mit Mitteln, um ausgehend von Trommeln (5, 6, 7) ein die obere Sohle (1) bildendes Blechband, ein die untere Sohle (2) bildendes Blechband, bzw. ein die Einlage (3) bildendes Band eines Siebgewebes oder Gitterwerks abzuspulen, mit Führungsrollen (9, 11, 12) für die beiden Blechbänder (1, 2) und das Band (3) aus Siebgewebe oder Gitterwerk, so daß die drei Bänder mit dem Band (3) aus Siebgewebe oder Gitterwerk in der Mitte übereinandergelegt werden, dadurch gekennzeichnet, daß sie eine Station (10) zum Auftragen des Klebstoffs auf wenigstens eines der drei die sandwichartige Struktur bildenden Elemente (1, 2, 3) umfaßt, sowie eine Vorrichtung zur Druckausübung auf die Anordnung der drei Bänder (1, 2, 3), bestehend aus zwei übereinander angeordneten Walzen (14, 15), zwischen denen die Bänderanordnung (1, 2, 3) hindurchgeführt wird.

5. Vorrichtung nach Anspruch 4, dadurch gekennzeichnet, daß die Mittel zum Abspulen der Bleche und des Siebgewebes oder Gitterwerks von den Trommeln (5, 6, 7) Bremsen (8) zur Spannungsregulierung aufweisen.

6. Vorrichtung nach einem der Ansprüche 4 oder 5, dadurch gekennzeichnet, daß sie am Ausgang der Vorrichtung (13, 14) zur Druckausübung eine Heizvorrichtung (15) zur Beschleunigung des Aushärtens des Klebstoffs besitzt.

7. Vorrichtung nach einem der Ansprüche 4 bis 6, dadurch gekennzeichnet, daß die sandwichartige Struktur zur Bildung einer Spule (16) auf einen durch einen Motor (17) drehantreibbaren Spulenkern aufgewickelt wird, wobei der Motor (17) durch eine Steuereinrichtung (18) derart gesteuert wird, daß aufgrund der durch das Steuersystem (17, 18) sichergestellten Wickelspannung ein ständiger Druck zwischen den Windungen der Spule (16) ausgeübt wird.

## Claims

1. Sandwich-type metallic structure, comprising two external metal plates (1, 2) and an inner core (3) held between the two external plates and constituted by a metallic screen or netting, a layer of adhesive (4) ensuring the bond between these plates and the core, characterized in that the adhesive (4) is distributed only in the meshes of the screen or netting (3), being absent from the contact zones between the screen or netting (3) and the plates (1, 2).

2. Sandwich-type metallic structure according to Claim 1, characterized in that it constitutes a tubular piece, obtained by rolling on itself a sandwich structure dissymetrical thickness-wise, i.e. comprising a thicker metal plate on the outside and a thinner plate on the inside, the welding which ensures holding of the tubular piece then being effected on the outer thick plate whilst the inner thin plate is maintained applied against the screen or netting constituting the core, under the effect of its elastic return.

3. Process for manufacturing a sandwich metallic structure according to either one of Claims 1 and 2, in which at least one of the three elements constituting the structure (1, 2, 3) is coated with adhesive and, immediately afterwards, the whole sandwich structure, constituted by the two plates (1, 2) and the intermediate core (3), is assembled by pressing, characterized in that pressing is effected whilst the adhesive is still in the fluid state, under a pressure of some bars, so that the adhesive in the fluid state creeps between the hard parts and is deposited in the meshes of the core (3), being absent from the contact zones between the core (3) and the plates (1, 2), and this pressure is maintained during the period of complete setting of the adhesive.

4. Installation for carrying out the process according to Claim 3, comprising means for unwinding from reels (5, 6, 7) respectively, a metal sheet forming the upper plate (1), a metal sheet forming the lower plate (2) and a strip of screen or netting forming the core (3), rollers (9, 11, 12) for guiding the two metal sheets (1, 2) and the strip of screen or netting (3), so that these three sheets and strip are superposed, the strip of screen or netting (3) being held in the middle, characterized in that it comprises a station (10) for adhesion of at least one of the three elements (1, 2, 3) constituting the sandwich structure, and a device for pressing the assembly of the three sheets and strip (1, 2, 3), which is consituted by superposed rollers (13, 14) between which this assembly of sheets and strip (1, 2, 3) passes.

5. Installation acccording to Claim 4, characterized in that the means for unwnding the reels (5, 6, 7) of metal sheets and of screen or netting, comprise tension regulating brakes.

6. Installation according to either one of Claims 4 and 5, characterized in that it comprises, at the outlet of the pressing device (13, 14), a heating device (15) for accelerating setting of the adhesive.

7. Installation according to either one of Claims 4 and 6, characterized in that the sandwich structure is wound to form a reel (16) on a mandrel driven in rotation by a motor (17) controlled by a servo- control device (18), so that a permanent pressure is exerted between each turn of the reel (16) due to the winding tension ensured by te servo-control system (17, 18).

Fig. 1

Fig. 2

Fig.3

EP 0 145 577 B1